# EUROPEAN PATENT APPLICATION

(11) **EP 3 508 731 A1**
(43) Date of publication of application: **10.07.2019**
(21) Application number: 19150431.5
(22) Date of filing: 04.01.2019
(51) Int. Cl.: F04D 27/00

(54) **ELECTRIC INFLATOR WITH SPEED CONTROL BY HIGH VOLTAGE DIMMER**

(30) Priority: 05.01.2018 CN 201820018725 U
(71) Applicant: Bestway Inflatables & Material Corp., Shanghai 201812 (CN)
(72) Inventor: HUANG, Shuiyong, Shanghai, Shanghai 201812 (CN); CHEN, Yalan, Shanghai, Shanghai 201812 (CN); QIU, Wanbin, Shanghai, Shanghai 201812 (CN)
(74) Representative: De Anna, Pier Luigi

(57) **Abstract**

An electric air pump includes an impeller, a blower motor (107, 308) coupled to the impeller, and configured to drive the impeller to rotate and generate air pressure, and a power interface (111) electrically communicated with the blower motor (107, 308) and by which an alternating current is supplied to power the blower motor (107, 308). The electric pump further includes an adjustable speed motor drive (110) electrically coupled to the power interface (111) and the blower motor (107, 308) to steplessly regulate the air pressure generated by the impeller via the blower motor (107, 308).

## Description

### CROSS REFERENCE TO RELATED APPLICATION

This utility patent application claims the benefit of Chinese patent application No. 201820018725.7, filed January 5, 2018, the content of which is incorporated herein by reference in its entirety.

### TECHNICAL FIELD

The present disclosure generally relates to an air pump, and more particularly, to an electric air pump capable of steplessly regulating inflating air pressure using an impeller.

### BACKGROUND

Inflatable objects such as inflatable mattresses are suitable for camping and serving as a household spare mattress for a guest's temporary use, given their advantages such as being compact, easy to carry, and store, etc. Generally, inflatable mattresses include at least one inflatable air cavity. Further, a conventional air-inflating device, such as a manually operated air pump or a handheld electric air pump, may be used to pump air into the inflatable mattress and supplement air for the inflatable mattress when internal pressure of the inflatable mattress drops below a desired level. Another type of conventional electric air pump, a built-in electric air pump, may be mounted on a sidewall of the inflatable mattress to inflate and/or deflate the inflatable mattress.

Conventional electric air pumps, whether being internal or external electric air pumps, usually have only one fixed maximum rotational speed, and accordingly are capable of achieving only one fixed air pressure value. Thus, when using the inflatable object, if the user has different demands for softness of the inflatable object, the user may fully inflate the inflatable object and then deflate the inflatable object until the desired softness or pressure level is achieved. Alternatively, the user could manually gage the level of inflation by observing and touching the inflatable object during inflation. Either of these options creates inconvenience by requiring attention and effort by the user.

### SUMMARY

With respect to the disadvantages and deficiencies described above for existing technology, the present disclosure provides an electric air pump capable of steplessly regulating inflation air pressure into an inflatable object by an impeller, such that the user can adjust the softness or level of inflation of the inflatable object as desired.

As used herein, the terms "steplessly regulating" or "stepless regulation" or "steplessly regulate" refer to performing regulation within a certain range in a continuous or smooth manner or in an approximately continuous or smooth manner, as compared with discontinuous regulation. For example, in some embodiments, even though the regulation may have a level of discontinuity varying slightly from the pre-defined threshold, and that would normally be defined as a discontinuous regulation based on the pre-defined ranges, this slight variation may thus be deemed insignificant enough to allow the regulation to still fall under stepless regulation.

In accordance with various embodiments of the present disclosure, an electric air pump assembly may include an air pump with an impeller and a blower motor coupled to the impeller to drive the impeller to rotate and generate air pressure. The electric air pump assembly may also include a power interface in electrical communication with the blower motor and configured to supply an alternating current to power the blower motor. The electric air pump assembly may also include an adjustable speed motor drive electrically coupled to the power interface and the blower motor to steplessly regulate the air pressure generated by the impeller via the blower motor.

In some embodiments, the adjustable speed motor drive may include an input device into which a stepless regulation command signal is input, and a regulation device communicatively coupled to the input device and configured to receive the stepless regulation command signal, with the regulation device also configured to control and regulate a driving voltage of the blower motor. The stepless regulation command signal may be an instruction to steplessly regulate the rotational speed of the impeller.

In some embodiments, the input device may include an adjustable trimpot configured to generate a potential signal representing the stepless regulation command signal. The regulation device may comprise a silicon-controlled rectifier driving circuit configured to control the rotational speed of the blower motor. The input device may also include a zero-crossing detection circuit coupled to the power interface configured to detect a zero-crossing signal of the alternating current. The input device may also include a microcontroller configured to: (1) receive the potential signal generated by the adjustable trimpot and the zero-crossing signal of the alternating current detected by the zero-crossing detection circuit, and (2) generate a rotational speed control signal based on the potential signal and the zero-crossing signal, and to send the rotational speed control signal to the silicon-controlled rectifier driving circuit.

In some embodiments, the regulation device may further include a rectifying power supply configured to transform the alternating current to direct current and to supply the direct current to at least one of: the microcontroller, the adjustable trimpot, the silicon-controlled rectifier driving circuit, and/or the zero-crossing detection circuit.

In some embodiments, the rectifying power supply may include a first rectifier and a transformer.

In some embodiments, the blower motor may be a direct current motor, and the electric air pump may further include a second rectifier configured to transform alternating current to direct current.

In some embodiments, the adjustable speed motor drive may further include a drive status indicator configured to transmit transmit a prompt indicating whether the adjustable speed motor drive is either working or not working.

In some embodiments, the electric air pump assembly may further include an air passage switching device configured to switch an air passage between an inflating position with an interior of the inflatable object in communication with an outlet of the air pump, or a deflating position with the interior of the inflatable object in communication with an inlet of the air pump, or a closed position with the interior of the inflatable object blocked from communication with the air pump.

In some embodiments, the electric air pump assembly may include an air pressure sensor configured to detect internal air pressure of an inflatable object. The electric air pump assembly may also include a central controller configured to start the blower motor when an air pressure value detected by the air pressure sensor is lower than a preset value and to deactivate the blower motor when the air pressure value detected by the air pressure sensor is equal to or higher than the preset value.

In some embodiments, the electric air pump assembly may further include an air-supplementing pump, an air pressure sensor configured to detect the internal air pressure of an inflatable object, and a central controller configured to start the air-supplementing pump when an air pressure value detected by the air pressure sensor is lower than a preset value, and deactivate the air-supplementing pump when the air pressure value detected by the air pressure sensor is equal to or higher than the preset value.

In some embodiments, the adjustable speed motor drive may also include an air pressure sensor configured to detect internal air pressure of an inflatable object, an input device configured to generate a stepless regulation command signal in response to a user operation, and a central controller communicatively coupled to the air pressure sensor and the input device. The central controller may be configured to generate a regulation command for regulating the rotational speed of the impeller according to an air pressure value detected by the air pressure sensor and the stepless regulation command signal. The adjustable speed motor drive may also include a voltage regulator communicatively coupled to the central controller, the voltage regulator being electrically coupled to the blower motor, and configured to regulate and apply a driving voltage to the blower motor according to the regulation command.

In some embodiments, the input device may include at least one of an adjusting knob, an adjusting key, or a touch-enabled display device.

In some embodiments, the electric air pump may further include a display device communicatively coupled to the central controller. The display device may be configured to receive and show display information generated by the central controller, where the display information includes at least one of an inflating status for the air pump, a deflating status for the air pump, a preset inflating air pressure value, a preset deflating air pressure value for the air pump, a current air pressure value detected by the air pressure sensor, a normal operating status for the air pump, or an abnormal operating status for the air pump.

In some embodiments, the electric air pump may further include an airflow controller coupled to the air pump and configured to drive switching between at least two positions.

In some embodiments, the airflow controller may include a flow control actuator and an air passage switching device, the flow control actuator being configured to switch from a first one of the at least two positions to a second one thereof according to a control command transmitted by the central controller. The at least two positions may include one or more of an inflating position, a deflating position, or a closed position.

The electric air pump in various embodiments of the present disclosure can steplessly regulate the rotational speed of the motor of the electric air pump via the stepless regulation system or the central control unit and the like so as to regulate the air pressure of the impeller of the electric air pump. Alternatively or additionally, the air pump may be controlled by the central control unit according to a detected pressure value of the inflatable object and a regulation instruction (e.g., the pressure value set by the user) input by the user. In this way, the internal pressure and, therefore, the softness of the inflatable object, can be adjusted.

### BRIEF DESCRIPTION OF THE DRAWINGS

To understand the present disclosure, it will be described by way of example, with reference to the accompanying drawings in which implementations of the disclosure are illustrated and, together with the descriptions below, serve to explain the principles of the disclosure.
Figure 1 is a schematic block diagram of an exemplary electric air pump according to embodiments of the present disclosure;
Figure 2 is a schematic block diagram of an exemplary electric air pump according to embodiments of the present disclosure;
Figure 3 is a schematic block diagram of an exemplary electric air pump according to embodiments of the present disclosure;
Figure 4 is a perspective view of an exemplary electric air pump according to embodiments of the present disclosure;
Figure 5 is an exploded view of the exemplary electric air pump embodiments shown in Figure 4;
Figure 6 is a schematic block diagram of an exemplary stepless regulation device of the electric air pump shown in Figure 4;
Figure 7A is an exploded view of an exemplary air passage switching device of the exemplary electric air pump shown in Figure 4 in a closed position;
Figure 7B is an exploded view of an exemplary air passage switching device of the electric air pump under a deflating position, as shown in Figure 4;
Figure 7C is an exploded view of an exemplary air passage switching device of the electric air pump under an inflating position, as shown in Figure 4;
Figure 8 is a schematic diagram of an exemplary air passage switching device and a connection tube of the electric air pump, as shown in Figure 4;
Figure 9 is a bottom view of a housing of the electric air pump as shown in Figure 4;
Figure 10 is a perspective view of an exemplary electric air pump according to various embodiments of the present disclosure;
Figure 11 is an exploded view of an exemplary electric air pump as shown in Figure 10;
Figure 12 is an exploded view of an exemplary airflow controller and the air pump of the electric air pump as shown in Figure 10;
Figure 13 is an exploded view of an exemplary airflow controller and the air pump of the electric air pump as shown in Figure 10;
Figure 14 is a schematic diagram of an exemplary air switching device switched to an inflating position;
Figure 15 is a schematic diagram of an exemplary air switching device switched to a deflating position;
Figure 16 is a schematic diagram of an exemplary air switching device switched to a closed position;
Figure 17 is a schematic diagram of an exemplary airflow controller and the air pump of the electric air pump as shown in Figure 10.

### DETAILED DESCRIPTION

The exemplary embodiments of the present disclosure are described below with reference to the drawings for illustration. It should be understood that the description about the exemplary embodiments should be considered as mere illustration of the structure and the principle of the electric air pump having a stepless regulation function, and the present disclosure is not limited to the exemplary embodiments.

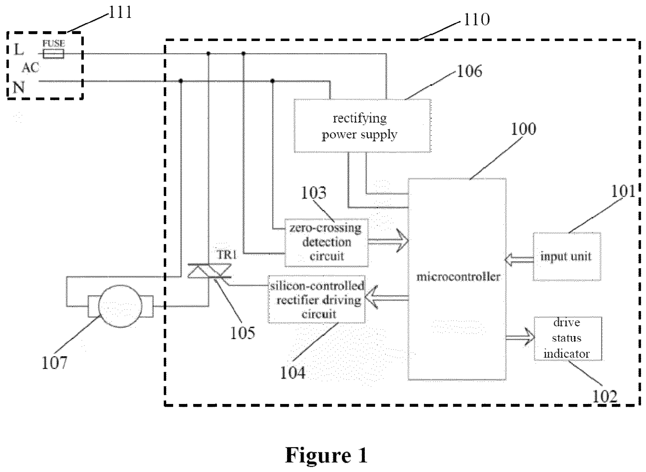

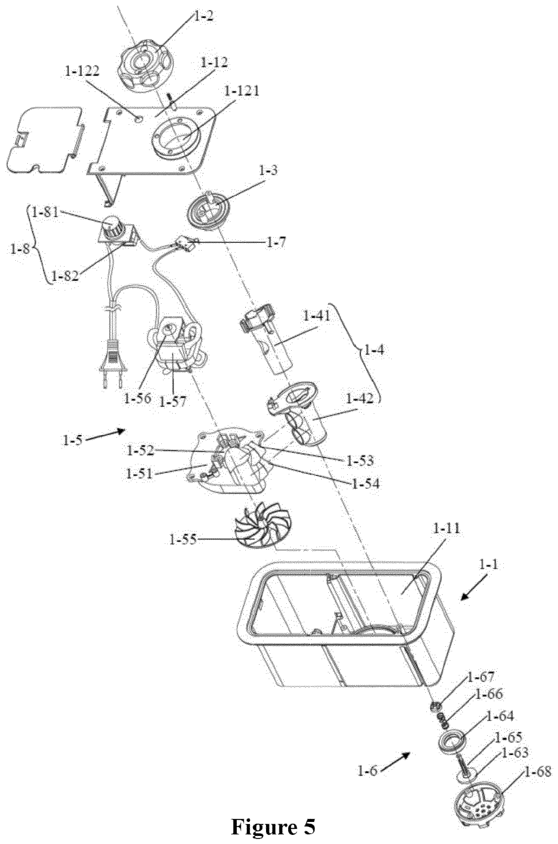

Figure 1 is a schematic block diagram of an exemplary electric air pump according to embodiments of the present disclosure. As shown in Figure 1, the electric air pump as provided in this embodiment may include, but is not limited to, an impeller (e.g., impeller 1-55 illustrated in Figure 5), a blower motor 107 for driving the impeller to rotate to generate air pressure, a power interface 111 through which an alternating current is supplied to the blower motor 107, and an adjustable speed motor drive 110. The power interface 111 may include a fuse electrically coupled to a live wire L, thereby functioning as overload protection for the circuit. As illustrated, the adjustable speed motor drive 110 is electrically coupled to the power interface 111 and the blower motor 107 to steplessly regulate the air pressure generated by the impeller. In the depicted embodiments, the adjustable speed motor drive 110 may include an input device 101, a silicon-controlled rectifier 105, a rectifier driving circuit 104, a zero-crossing detection circuit 103, a microcontroller 100, a rectifying power supply 106, and a drive status indicator 102.

In particular, the input device 101 can receive a stepless regulation command signal, for example, from a user. Alternatively, the input device 101 may include an adjustable trimpot operated by the user to generate a potential signal representing the stepless regulation command signal. For example, the adjustable trimpot may be a rotary potentiometer. The microcontroller 100 receives a regulation instruction input from the input device 101 and controls and regulates the driving voltage of the blower motor 107 based on the stepless regulation command signal, so as to steplessly regulate the rotational speed of the impeller (e.g., impeller 1-55) driven by the blower motor 107. Various rotational speeds result in corresponding air pressures generated by the impeller. Therefore, by adjusting the air pressure generated by the impeller, the inflating air pressure of the inflatable object may be correspondingly adjusted.

In accordance with some embodiments, the zero-crossing detection circuit 103 may be coupled to the power interface, i.e., live wire L, and neutral wire N, for detecting the zero-crossing signal of the alternating current. The input device 101 may be a rotary potentiometer, in which case, the microcontroller 100 receives a potential signal generated by the rotary potentiometer. The microcontroller 100 may also receive a zero-crossing signal of the alternating current detected by the zero-crossing detection circuit 103. The microcontroller 100 may generate a control signal corresponding to the rotational speed based on the potential signal and the zero-crossing signal. The microcontroller 100 may then send the controlling signal for the rotational speed to the silicon-controlled rectifier driving circuit 104. As depicted, the silicon-controlled rectifier driving circuit 104 is electrically coupled to the blower motor 107 through the silicon-controlled rectifier 105. The rotational speed of the blower motor 107 can be controlled based on the controlling signal for the rotational speed, so as to adjust the air pressure generated by the impeller. As an example, the method for regulating and controlling voltage through the silicon-controlled rectifier 105 is further described below.

The rotary potentiometer may generate an analog signal, i.e., a potential signal or a level signal, representing a rotation position of the rotary potentiometer. The analog signal is then converted to a digital signal. The microcontroller 100 may calculate a setting percentage ("SP") based upon the position of the rotary potentiometer and its resulting digital signal. The zero-crossing detection circuit 103 may determine a zero point of the power (alternating current) by detecting the zero-crossing signal of the alternating current. In alternating current, the zero-crossing is the instantaneous point at which there is no voltage present. In a sine wave or other simple waveform, this normally occurs twice during each cycle. The detected signal is input into the microcontroller 100 which calculates time ("T") between the two zero points and performs calculation based on the setting percentage SP of the position of the rotary potentiometer and the time T between the two zero points to obtain a single period time of the signal t = T x SP. In accordance with some embodiments, the microcontroller 100 then outputs the single period time as the controlling signal for the rotational speed, to the silicon-controlled rectifier driving circuit 104. The silicon-controlled rectifier driving circuit 104 can switch the power through the silicon-controlled rectifier 105, based on the controlling signal for the rotational speed. For example, with the setting percentage of 50% (SP = 0.50), and with a time T = 0.02s, then t = 0.01s.

In some embodiments, the electrical power (alternating current) supplied to the blower motor 107 is decreased by supplying a specific output voltage v (alternating current) thereto. In particular, the output voltage v = V x SP, where V is a supply voltage, such as 220 VAC, and where SP is the setting percentage. The blower motor 107 is operated by the output voltage v to rotate and drive rotation of the impeller. For example, with SP = 1.0, the blower motor 107 is operated with the output voltage v = the supply voltage V. As another example, with SP = 0.5, the blower motor 107 is operated with the output voltage v = 0.5 x the supply voltage V. With a supply voltage V of 220 V, the output voltage v would, therefore be 0.5 x 220 = 110 V. The blower motor 107 thus controls the rotational speed of the impeller based on the output of the microcontroller 100. Accordingly, the air pressure of the impeller and the inflating air pressure of the inflatable object can be controlled.

In some embodiments, the rectifying power supply 106 is used for converting the alternating current to direct current, and supplying the direct current to the microcontroller 100, the input device 101, the silicon-controlled rectifier driving circuit 104, and the zero-crossing detection circuit 103. In particular, the rectifying power supply 106 may include, but is not limited to, a rectifier and transformer. The high-voltage alternating current may be converted to low-voltage direct current via the rectifying power supply 106 and then supplied to the microcontroller 100, the input device 101, the silicon-controlled rectifier driving circuit 104 and the zero-crossing detection circuit 103. In some embodiments, the alternating current of 220VAC may be converted to a direct current of, for example, but not limited to, 5VDC.

In some embodiments, the drive status indicator 102 may provide a prompt to the user indicating whether the system is working or not by various means such as sound, light, vibration and other similar audio, visual, or sensory indicators. Therefore, the drive status indicator 102 may include one or more of an indicator light, a loudspeaker, a buzzer, a display and a vibrator. For example, when the power is switched on to operate each element, the indicator light is turned on. When the power is switched off, the indicator light is turned off.

In accordance with various embodiments, the blower motor 107 may be a direct current motor. The electric air pump may further include a second rectifier (not shown) for converting the high-voltage alternating current to the high-voltage direct current.

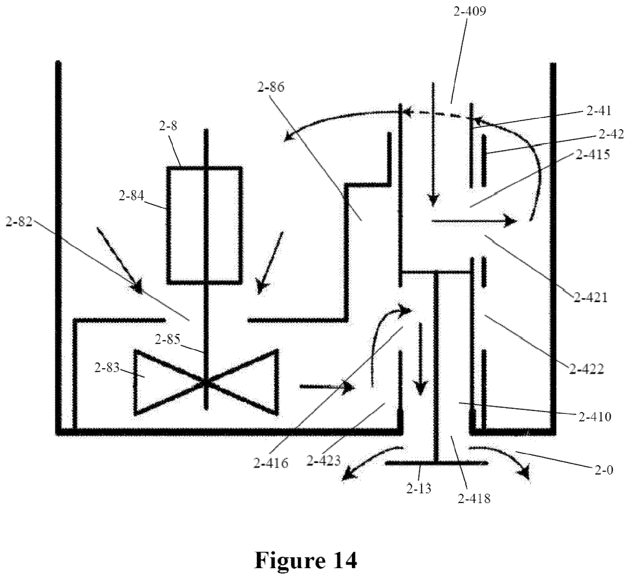

In some embodiments, the electric air pump may further include an air passage switching device for switching between an inflating position, a deflating position and a closed position. Examples of the air passage switching device in each of the inflating position, the deflating position, and the closed position are illustrated in FIGS. 14, 15, and 16, respectively. Each of FIGS. 14, 15, and 16 shows an air pump 2-8, which may include a motor 2-84 coupled to an impeller 2-83 by a shaft rotating about a rotational axis 2-85.

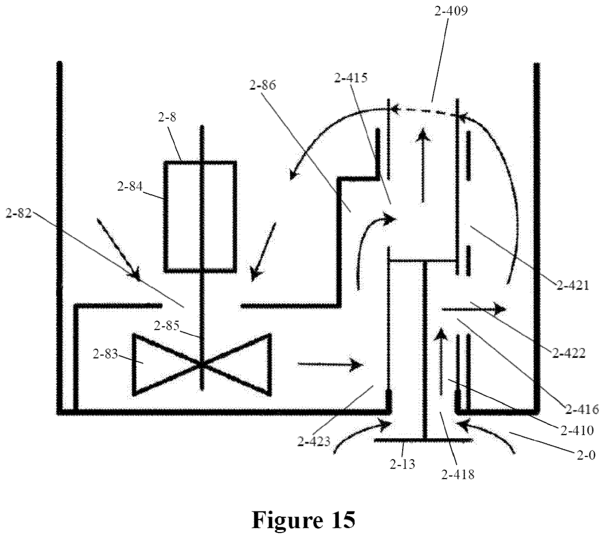

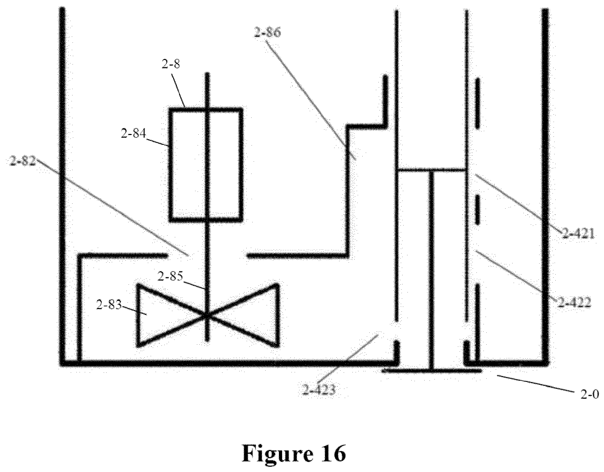

In the inflating position, illustrated in FIG. 14, the interior of the inflatable object 2-0 is in communication with an outlet 2-86 of an air pump 2-8, so the air pump 2-8 provides air into the interior of the inflatable object 2-0. In the deflating position, illustrated in FIG. 15, the interior of the inflatable object 2-0 is in communication with an inlet 2-82 of an air pump 2-8, so the air pump 2-8 actively removes air from the interior of the inflatable object 2-0. In the closed position, illustrated in FIG. 16, the interior of the inflatable object 2-0 is blocked from communication with the air pump 2-8 in the closed position, preventing air from being provided to or removed from the interior of the inflatable object 2-0.

The air passage switching device may include an inner tube and an outer tube, on the side of which a vent is disposed. The vent is in communication with the outlet of the impeller housing. Switching of the air passage occurs through rotation of the inner tube relative to the outer tube, so as to achieve the inflation and rapid deflation of the inflatable object. A switch actuator is disposed on the inner tube, above the air passage switching device. In some embodiments, a switch is disposed between the regulation device and the motor. When not in use, the switch is in the "off' configuration. During inflation of the inflatable object, the hand wheel is rotated and the air passage is switched through rotation of the inner tube relative to the outer tube. The rotation of the inner tube causes a corresponding rotation of the switch actuator which then contacts and actuates the switch to the "on" configuration. In some embodiments, the input device may further include a regulation knob for inputting the stepless regulation command signal. The knob is rotated so as to either inflate or deflate the inflatable object based on the input stepless regulation command signal. When rotating the knob, the motor works under a preset value. When the air pressure within the inflatable object equals to the air pressure produced by the motor, no air is pumped into the inflatable object. At this time, the hand wheel is rotated to the closed position and contact between the switch actuator and the switch is discontinued, such that the switch returns to the "off' configuration as the circuit is in "off' status and the motor is stopped.

In accordance with various embodiments, the electric air pump may further include an air pressure sensor for detecting the internal air pressure of the inflatable object, and a central controller. The central controller energizes the blower motor when the air pressure value detected by the air pressure sensor is lower than the preset value. The central controller deenergizes the blower motor when the air pressure value is equal to or higher than the preset value.

In some embodiments, the electric air pump may further include an air-supplementing pump, an air pressure sensor for detecting the internal air pressure of the inflatable object, and a central controller. The central control controller initiates the air-supplementing pump when the air pressure value detected by the air pressure sensor is lower than the preset value, and the central controller disables the air-supplementing pump when the air pressure value is equal to or higher than the preset value.

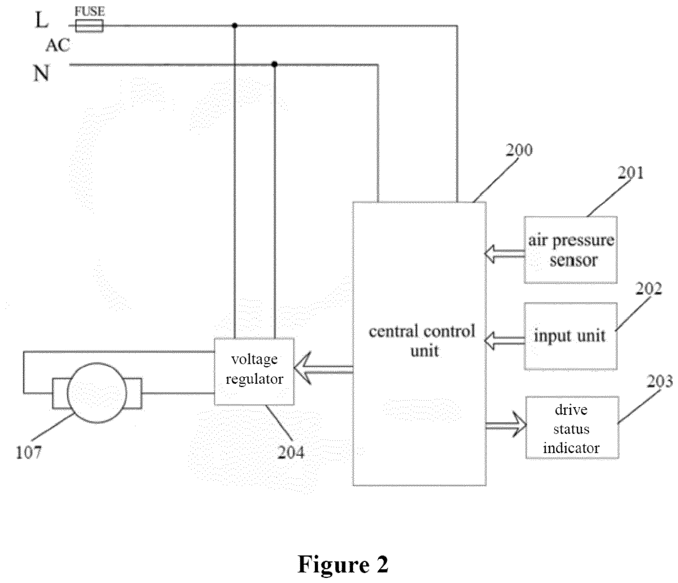

Figure 2 is a schematic block diagram of the electric air pump according to various embodiments of the present disclosure. The electric air pump according to the illustrated embodiments is different from the electric air pump of the various embodiments illustrated in Figure 1, particularly with respect to the configuration of the adjustable speed motor drive. In particular, the adjustable speed motor drive of the various embodiments as shown in Figure 1 utilizes a silicon-controlled rectifier regulation method, while the adjustable speed motor drive of the various embodiments of Figure 2 utilizes air pressure feedback to control the rotational speed of the impeller. A more detailed description of the various embodiments of Figure 2 follows below.

As shown in Figure 2, the adjustable speed motor drive, may include, but is not limited to, an air pressure sensor 201, an input device 202, a central controller 200 (or "central control unit 200"), a voltage regulator 204, and a drive status indicator 203. The air pressure sensor 201 is used for detecting the internal pressure of the inflatable object. The input device 202 is operated by the user to input the stepless regulation command signal, which may include a desirable air pressure value for the inflatable object. The central controller 200 may be communicatively coupled to the air pressure sensor 201 and the input device 202. A regulation command for adjusting the rotational speed of the impeller may be generated according to the air pressure value detected by the air pressure sensor 201 and the stepless regulation command signal input through the input device 202 by the central controller 200. The voltage regulator 204 may be communicatively coupled to the central controller 200 and electrically coupled to the blower motor 107 for adjusting the driving voltage supplied to the blower motor 107 according to the regulation command from the central controller 200. The voltage regulator 204 may also supply the adjusted driving voltage to the blower motor 107, thereby enabling the blower motor 107 to work under the adjusted driving voltage. The voltage regulator 204 can be any electric elements for adjusting the input voltage to the driving voltage adapted for allowing the blower motor 107 to drive the impeller to generate the air pressure corresponding to the air pressure value indicated by the stepless regulation command signal. For example, the electric elements within the voltage regulator 204 may include a zero-crossing detection circuit, a silicon-controlled rectifier, a silicon-controlled rectifier driving circuit, and the like. In this manner, stepless regulation for the rotational speed of the impeller as well as adjustment of the inflating air pressure of the inflatable object may be achieved.

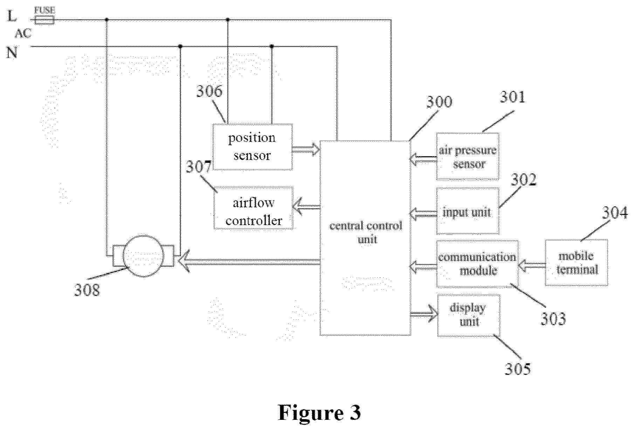

In the depicted embodiments, the input device 202 may include one or more of an adjusting knob, an adjusting key, and/or a touch screen display device. Alternatively, the input device 202 may include a mobile terminal (e.g., mobile terminal 304 illustrated in Figure 3) wirelessly coupled to the central controller 200. For example, the mobile terminal, which may be alternatively referred to as a mobile device, may be a smart terminal such as a smart phone, a tablet computer and the like. Therefore, the electric air pump may be adjusted by an application program ("AP") through the mobile terminal.

In some embodiments, the drive status indicator 203 may be a display device in communication with the central controller 200, for receiving the display information generated by the central controller 200 and displaying the generated information. The display information may include at least one working status selected from a group consisting of an inflating status, a deflating status, a preset inflating air pressure value, a preset deflating air pressure value, a current air pressure value, a normal working status, and an abnormal working status.

Alternatively, the electric air pump may further include the air-supplementing pump, the air passage switching device, and the like as mentioned above.

Figure 3 is a schematic block diagram of the electric air pump according to various embodiments of the present disclosure. The various embodiments depicted in Figure 3 are examples of the electric air pump controlled by the air pressure feedback. In the depicted embodiments, the electric air pump may include, but is not limited to, an air pump with a blower motor 308, an airflow controller 307, an air pressure sensor 301, a central controller 300 (or "central control unit 300"), and the like. The air pump is used to inflate or deflate the inflatable object. The airflow controller 307 may drive one or more components of the electric air pump to switch between two or more positions, such as an inflating position and a deflating position. The air pressure sensor 301 detects the internal air pressure of the inflatable object. The central controller 300 receives the stepless instruction from the user and controls the air pump (or blower motor 308) and the airflow controller 307. The central controller 300 controls the air pump (or blower motor 308) and the airflow controller 307 according to the detected result from the air pressure sensor 301 and the stepless regulation command signal to steplessly regulate the internal air pressure of the inflatable object. The stepless regulation command signal may include an air pressure value input by the user. In particular, the central controller 300 is configured to send a driving signal to drive the airflow controller 307 to initiate switching of air passages. The central controller 300 may also send an initiating signal or a stopping signal according to the internal air pressure of the inflatable object as detected by the air pressure sensor 301 and the preset air pressure value input by the user so as to initiate or disable the air pump.

In this embodiment, the airflow controller 307 may include a flow control actuator, such as a motor or a pneumatic cylinder, and an air passage switching device. The flow control actuator is configured to control the air passage switching device to switch between two or more positions according to the controlling command of the central controller 300. The positions may include an inflating position, a deflating position, and a closed position. The electric air pump may further include a position sensor 306 coupled to the central controller 300 and configured to send a position feedback signal to the central controller 300 when the airflow controller 307 is switched to the inflating position, the deflating position, or the closed position.

In accordance with various embodiments, the electric air pump may further include an input device 302 for inputting a stepless regulation command signal. For example, the input device 302 may include one or more of an adjusting knob, an adjusting key, and/or a touch screen display device. Further, the electric air pump may further include a wireless communication module, i.e., communication module 303, for receiving the stepless regulation command signal sent by the user from the mobile terminal 304. The electric air pump may include one or both of the input device 302 and/or the communication module 303.

In one alternative embodiment, the electric air pump may further include a display device 305 communicatively coupled to the central controller 300, and configured to receive the display information generated by the central controller 300 and display the generated information. The display information may include at least one working status, which may be one or more of: an inflating status, a deflating status, a preset inflating air pressure value, a preset deflating air pressure value, a current air pressure value, a normal working status, and/or an abnormal working status.

In accordance with various embodiments, the air pump may include an impeller, a direct current motor for driving rotation of the impeller, a rectifier for converting the high-voltage alternating current to high-voltage direct current, and supplying the high-voltage direct current to the direct current motor. Alternatively, the electric air pump may further include an air-supplementing pump for supplementing air under the control of the central controller 300. For example, when the air pressure of the inflatable object as detected by the air pressure sensor is lower than the preset value, the air-supplementing pump is initiated. When the supplemented air pressure arrives at the preset value, the air-supplementing pump is stopped.

As one example, the electric air pump as shown in Figure 3 (or as shown elsewhere in this disclosure) may have the following exemplary preset values.

The adjusting knob for controlling an air pressure preset value for automatically disabling inflation: 220-320 mmH2O

The deflating key for controlling an air pressure preset value for automatically disabling deflation: -40±10mmH2O

The air pump may be initiated in response to a change in position of the adjusting knob if the adjusting amount exceeds a predetermined threshold value, which may be preset in the program. In some embodiments, the predetermined threshold value may be greater than or equal to 40 mmH2O, ranging in one example from 40 mmH2O to 100 mmH2O or any other desired range. The predetermined threshold value may be, for example, 50 mmH2O or any other desired setting. Embodiments described herein specify 50 mmH2O as an example, but the various embodiments are not limited thereto.

During inflation using the air-supplementing pump, the air-supplementing pump may be initiated when the adjusting amount is less than or equal to the predetermined threshold value, which may be preset in the program. Alternatively or additionally, the air-supplementing pump may be initiated when the adjusting amount is greater than or equal to 40 mmH2O, ranging in one example from 40 mmH2O to 100 mmH2O or any other desired range. The predetermined threshold value may be, for example, 50 mmH2O or any other desired setting.

The adjusting knob and inflation using the air-supplementing pump, which may be referred to as air-supplementation, may be operated according to the following protocol.

Upon initiating inflation, when the adjusting knob is rotated from low to high to a specific inflating air pressure value (e.g., 270 mmH2O), the air pressure sensor may first detect the internal pressure of the inflatable object. When the internal pressure is lower than or equal to 220 mmH2O (i.e., the adjusting amount is 50 mmH2O, which is equal to the predetermined threshold value 50 mmH2O), the air pump is initiated. When the air pressure of the inflatable object as detected by the air pressure sensor arrives at 270 mmH2O, the air pump is disabled. When the internal air pressure of the inflatable object as detected by the air pressure sensor is between 220 mmH2O and 270 mmH2O, the air pump is disabled.

When the knob is rotated from high to low to arrive at the desired air pressure value (e.g., 220 mmH2O), the air pressure sensor may first detect the internal pressure of the inflatable object. When the internal pressure is higher than or equal to 270 mmH2O (i.e., the adjusting amount is 50 mmH2O, which is equal to the predetermined threshold value 50 mmH2O), the air passage is switched to the deflating position to perform deflation. The air pump is initiated to withdraw the air from the interior of the inflatable object to the exterior thereof, thereby achieving deflation. Alternatively, the inflatable object can naturally deflate air without using the air pump, e.g.., when the air pump is not working. When the internal air pressure of the inflatable object as detected by the air pressure sensor reaches 220 mmH2O, the air pump is disabled. When the internal air pressure of the inflatable object as detected by the air pressure sensor is between 220 mmH2O and 270 mmH2O, the air pump is disabled.

When performing air-supplementation, assuming that the preset air pressure value is 270 mmH2O, the air pressure sensor can detect the internal air pressure of the inflatable object in-real time. When the internal air pressure of the inflatable object as detected is decreased between 270 mmH2O and 220 mmH2O, the air pump is disabled. When the internal air pressure of the inflatable object as detected is decreased to 220 mmH2O and below (i.e., the adjusting amount is equal to or lower than the predetermined threshold value 50 mmH2O), the air-supplementing pump is initiated. When the air pressure arrives at 270 mmH2O by air-supplementation, the air-supplementing pump is stopped.

Various embodiments as detailed above describe the electric air pump with a stepless regulation function as provided in the present disclosure. The relative components that may be employed for a stepless regulation function is illustrated. It should be understood that the structure of the electric air pump is not limited to the components as described in the above embodiments and that other components and configurations are conceivable for achieving the stepless inflation and deflation functions. Various embodiments of electric air pumps employing stepless regulation functions, as provided in the present disclosure, are further described below.

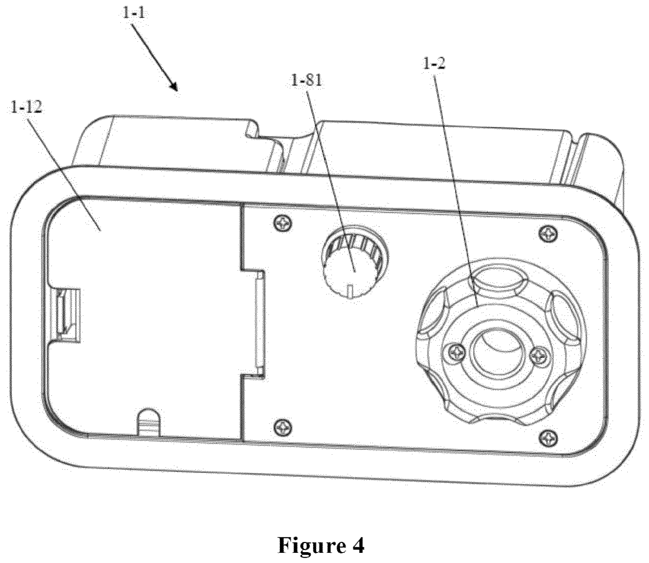

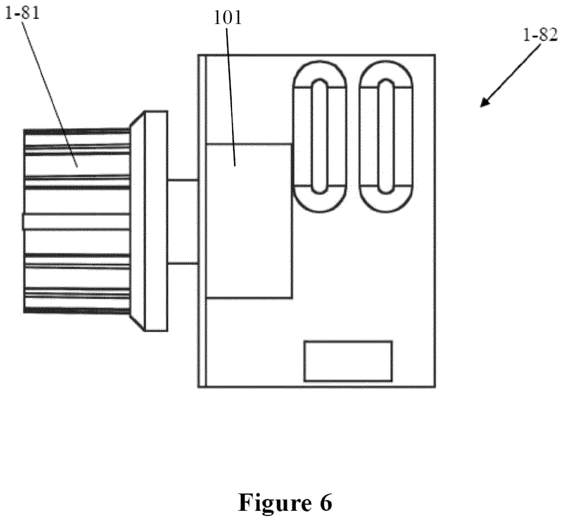

Figure 4 is a perspective view of the electric air pump according to the various embodiments of the present disclosure. Figure 5 is an exploded view of the electric air pump as shown in Figure 4. Figure 6 is a schematic block diagram of the stepless regulation device of the electric air pump as shown in Figure 4. Referring to Figures 4 and 5, the electric air pump according to various embodiments of the present disclosure may include a pump housing 1-1, a switch hand wheel 1-2, a connection tube 1-3, an air passage switching device 1-4, an air pump 1-5, an air valve 1-6, a power switch 1-7, and an adjustable speed motor drive 1-8. The pump housing 1-1 is a container having a box-shaped cavity 1-11 which receives the connection tube 1-3, the air passage switching device 1-4, the air pump 1-5 and the adjustable speed motor drive 1-8. A panel 1-12 is disposed on the top of the pump housing 1-1. The switch hand wheel 1-2 is disposed outside of the panel 1-12. The air valve 1-6 is disposed on bottom of the pump housing 1-1.

Referring to Figures 5 and 6, the adjustable speed motor drive 1-8 may include a knob 1-81, a silicon-controlled rectifier (SCR) voltage regulation controller 1-82, and an indicator (not shown). As illustrated, the silicon-controlled rectifier voltage regulation controller 1-82 may include a rotary potentiometer (i.e., an input device 101) engaged with the knob 1-81, The knob 1-81 is sleeved on the axis of the rotary potentiometer passing through the knob hole 1-122 on the panel 1-12. The silicon-controlled rectifier driving circuit 104, the rotary potentiometer (input device 101), and the zero-crossing detection circuit 103 may be coupled to the microcontroller 100 as shown in Figure 1. The microcontroller 100 receives signals sent from the rotary potentiometer and the zero-crossing detection circuit 104. Upon calculation by the microcontroller 100, the signals may be output to the silicon-controlled rectifier circuit 104 which may then convert the alternating voltage of the power to the desired alternating voltage based on the signals sent from the microcontroller 100.

Based on the above structure, the silicon-controlled rectifier voltage regulation controller performs the following controlling procedures. When the rotary potentiometer is rotated as a result of rotating the knob 1-81 by the user, the rotary potentiometer performs position detection to generate an analog potential signal representing the rotation position of the rotary potentiometer. The analog signal is converted to a digital signal by an analog-to-digital converter, which may be integrated with or external from the microcontroller 100. The microcontroller 100 calculates the percentage P of the rotation position for the rotary potentiometer (i.e., the rotation amount of the rotary potentiometer corresponds to the voltage value input by the user). The zero point of the power is determined by detecting the zero-crossing signal of the alternating power by the zero-crossing detection circuit 103. The detection results are input into the microcontroller 100 which calculates time T between two zero points. The microcontroller performs calculation based on SP and T to obtain the signal single period time t = T x SP, and outputs a signal for controlling rotational speed (single period time t) to the silicon-controlled rectifier driving circuit 104. The power can be turned on or off through the silicon-controlled rectifier 105 based on the signal for controlling rotational speed. The voltage (alternating current) supplied to the blower motor 107 is decreased to a specific output voltage (alternating current) that is v = V x SP.

In the depicted embodiments, the silicon-controlled rectifier voltage regulation controller 1-82 may further include a rectifying power supply (e.g., rectifying power supply 106 illustrated in Figure 1) which may include a first rectifier and a transformer. The high-voltage alternating current is converted to the low-voltage direct current through the rectifying power supply 106, which is then supplied to the microcontroller 100, the silicon-controlled rectifier driving circuit 104, the rotary potentiometer and the zero-crossing detection circuit 103.

In the depicted embodiments, the indicator is disposed within the light hole on the panel 1-12. When switching on the power and initiating each component, the indicator is illuminated. When switching off the power, the indicator is turned off. In the depicted embodiments, the air passage switching device 1-4 is a device disposed within the electric air pump 1-5, for alternating the flowing direction of air by alternating the air passage through which the air flows, and achieving inflation, deflation and closing of the electric air pump.

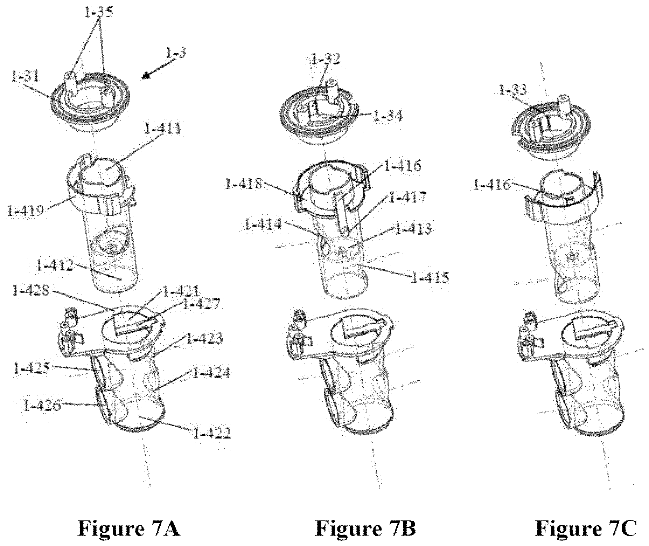

Figure 7A is an exploded view of the air passage switching device of the electric air pump under closed position, as shown in Figure 4. Figure 7B is an exploded view of the air passage switching device of the electric air pump under deflating position, as shown in Figure 4. Figure 7C is an exploded view of the air passage switching device of the electric air pump under inflating position, as shown in Figure 4.

Referring to Figures 5, 7A, 7B, 7C, a hollow inner tube 1-41 and a hollow outer tube 1-42 are disposed within the air passage switching device 1-4. The top and bottom ends of the inner tube 1-41 have a first opening 1-411 and a second opening 1-412 respectively. The first opening 1-411 is in communication with the ambient atmosphere at the exterior of the inflatable object via the connection tube 1-3. The second opening 1-412 is in communication with the air valve 1-6. A first sliding block 1-416 corresponding in position with the connection tube 1-3, a second sliding block 1-417 corresponding in position with the outer tube 1-42 of the air passage switching device 1-4, and a flange 1-418 disposed between the first sliding block 1-416 and the second sliding block 1-417 are disposed outside of the inner tube 1-41. A switch actuator 1-419 is disposed on the edge of the top surface of the flange 1-418. A partition 1-413 is disposed within the inner tube 1-41 for separating an inner cavity of the inner tube 1-41 into upper and lower portions not in communication with each other. A first vent 1-414 and a second vent 1-415 are disposed on the tube wall of the inner tube 1-41, above and below the partition 1-413, respectively. The opening direction of the first vent 1-414 is opposite to the opening direction of the second vent 1-415. The outer tube 1-42 is sleeved outside of the inner tube 1-41 with two ends as a third opening 1-412 and a fourth opening 1-422 respectively. The inner wall of the outer tube 1-42 is concentrically adjacent to the outer wall of the inner tube 1-41. The inner tube 1-41 can move or rotate within the outer tube 1-42. A flange 1-428 is disposed on the top of the outer tube 1-42 and the pump housing 1-11 is fixedly coupled to the bottom of the outer tube 1-42. The air valve 1-6 is disposed inside of the fourth opening 1-422 at the bottom of the outer tube 1-42. A first air inlet 1-425 and a second air inlet 1-426 which are adjacent to each other, and a first air outlet 1-423 and a second air outlet 1-424 that are opposite to each other, are disposed on the wall of the outer tube 1-42.

A wave sliding slot 1-427 is disposed on the wall of the outer tube 1-42 for receiving the second sliding block 1-417 on the inner tube 1-41. The wave sliding slot 1-427 includes a middle portion disposed at a raised position compared to each of two ends at either side of the middle portion. Based on the above structure, when rotating the inner tube 1-41 to move the second sliding block 1-417 of the inner tube 1-41 to the first low position 1-A1 in the wave sliding slot 1-427 of the outer tube 1-42 the lower surface of the flange 1-418 of the inner tube 1-41 abuts against the upper surface of the flange 1-428 of the outer tube 1-42. In other words, interaction between the second sliding block 1-417 of the inner tube 1-41 and the wave sliding slot 1-427 of the outer tube 1-42 causes the inner tube to move axially between a raised position with the inner tube 1-41 fully rotated in either direction, as illustrated in figures 7B and 7C. In either of those positions, the inner tube 1-41 is in a lowered position with the flange 1-418 of the inner tube 1-41 abutting the flange 1-428 of the outer tube 1-42. With the inner tube 1-41 in the intermediate position illustrated in figure 7A, the inner tube 1-41 is in a raised position with the flange 1-418 of the inner tube 1-41 being spaced apart from the flange 1-428 of the outer tube 1-42.

The first vent 1-414 at the inner tube 1-41 is opposite to the first air outlet 1-423 at the outer tube 1-42. The second vent 1-415 at the inner tube 1-41 is opposite to the second air inlet 1-426 at the outer tube 1-42. The second air outlet 1-424 and the first air inlet 1-425 at the outer tube 1-42 are blocked by the wall of the inner tube 1-41. When rotating the inner tube 1-41 to move the second sliding block 1-417 of the inner tube 1-41 to the second low position 1-A2 in the wave sliding slot 1-427 of the outer tube 1-42 (see Figure 7B), the lower surface of the flange 1-418 of the inner tube abuts against the upper surface of the flange 1-428 of the outer tube 1-42. The first vent 1-414 at the inner tube 1-41 is opposite to the first air inlet 1-425 at the outer tube 1-42. The second vent 1-415 at the inner tube 1-41 is opposite to the second air outlet 1-424 at the outer tube 1-42. The first air outlet 1-423 and the second air inlet 1-426 at the outer tube 1-42 are blocked by the wall of the inner tube 1-41. In practice, the corresponsive relationship between the first vent 1-414, the second vent 1-415 at the inner tube and the first air outlet 1-423, the second air outlet 1-424, the first air inlet 1-425 and the second air inlet 1-426 at the outer tube 1-42 can be changed by rotating the inner tube 1-41, so as to switch the air passage. A power switch 1-7 is disposed outside of the arc sheet 1-419 of the inner tube 1-41. When rotating the inner tube 1-41, the arc sheet 1-419 is contacted with the power switch 1-7, such that the power is turned on or off.

Referring to Figure 5, in accordance with some embodiments, the air pump may include a fan cover 1-51 fixed to the pump housing 1-1, both of which define an individual chamber. The fan cover 1-51 is provided with an air inlet 1-52, a first air outlet 1-53, and a second air outlet 1-54. The air inlet 1-52 is in communication with the first air outlet 1-423 and the second air outlet 1-424 at the outer tube 1-42 of the air passage switching device 1-4. The first air outlet 1-53 and the second air outlet 1-54 of the air pump 1-5 are coupled respectively to the first air inlet 1-425 and the second air inlet 1-426 at the outer tube 1-42 of the air passage switching device 1-4. Impeller 1-55 is disposed within the fan cover 1-51. As depicted, a motor 1-56 may be mounted on the fan cover 1-51. The rotation axis of the motor 1-56 passes through the air inlet 1-52 on the fan cover 1-51 which is to be coupled to the impeller 1-55. When the motor 1-56 is working, air enters into fan cover 1-51 and is expelled from the first air outlet 1-53 or the second air outlet 1-54 of the air pump after being pressured by the impeller 1-55.

In some embodiments, the air pump 1-5 may further include a second rectifier 1-57 disposed on the side wall of the motor 1-56. The high-voltage alternating current is converted to the high-voltage direct current through the second rectifier 1-57, and is then supplied to the motor 1-56.

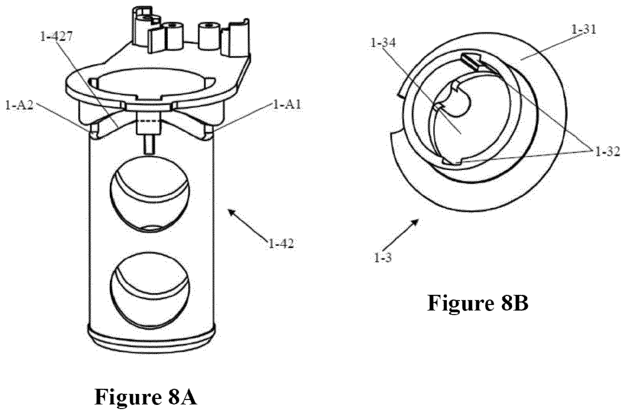

Figure 8 is a schematic diagram of the air passage switching device and the connection tube of the electric air pump as shown in Figure 4. In some embodiments, referring to Figures 7A, 7B, 7C and 8, the connection tube 1-3 is disposed inside of the panel 1-12 of the pump housing 1-1. A flange 1-31 with a diameter larger than the opening 1-121 of the panel 1-12 is disposed on the top of the connection tube 1-3. The surface of the flange 1-31 is closely adjacent to the panel 1-12 of the pump housing 1-1. Two protruded stages 1-35 are disposed on the upper surface of the flange 1-33. The protruded stages pass through the opening 1-121 of the panel 1-12 to couple to the switch hand wheel 1-2. The upper opening 1-34 on the top of the connection tube 1-3 is corresponsive with the opening 1-121 of the panel 1-12 and in communication with the venting tube of the switch hand wheel 1-2. The bottom of the connection tube 1-3 is sleeved on the top of the inner tube 1-41 of the air passage switching device 1-4. A straight sliding slot 1-32 is disposed on the inner wall of the inner tube 1-3 for receiving the second sliding block 1-417 of the inner tube 1-41 to axially slide therein.

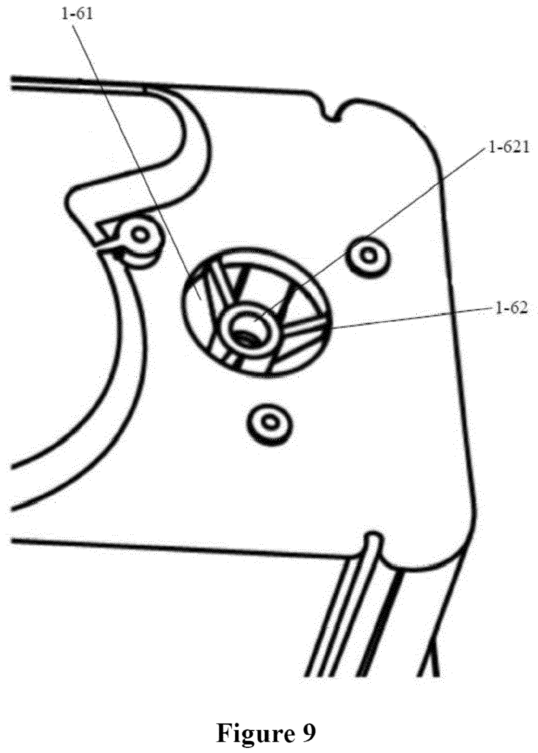

Figure 9 is a bottom view of the housing of the electric air pump as shown in Figure 4. In some embodiments, referring to Figures 5 and 9, the air valve 1-6 is disposed on the bottom of the pump housing 1-1. A scaffold 1-62 for air valve is disposed at the air valve opening 1-61, at the center of which a hole 1-621 is disposed. A valve rod 1-65 is disposed within the hole 1-621 and can axially slide therein. A cap 1-67 for valve rod 1-65 and a valve sheet 1-63 fixably coupled to the valve rod 1-65 are disposed on opposing ends of the valve rod 1-65, respectively. The upper end of the valve rod 1-65 extends into the interior of the inner tube 1-41 of the air passage switching device 1-4, and is adjacent to the partition 1-413 of the inner tube 1-41. A sealing ring 1-64 is disposed on the edge of the valve sheet 1-63. A spring 1-66 is sleeved exterior to the valve rod 1-65, which is located between the scaffold 1-62 for the air valve 1-6 and the cap 1-67 for the valve rod 1-65. A protective cover 1-68 may enclose and protect the valve sheet 1-63.

Based on the above structure, in the case that no other force is applied to the air valve 1-6, the valve sheet 1-63 covers the air valve opening 1-61 by virtue of elastic force of the spring 1-66, such that the air valve 1-6 is in closed position. When the inner tube 1-41 of the air passage switching device is moved downward, the partition 1-413 of the inner tube 1-41 contacts the valve rod 1-65 and applies a downward force on the valve rod 1-65, such that the air valve 1-6 is opened. When the air valve 1-6 is open, the interior of the inflatable object is fluidly communicated with the environment exterior to the inflatable object. When the air valve 1-6 is closed, the interior of the inflatable object is isolated from the environment exterior to the inflatable object.

In accordance with some embodiments, as shall be described in further detail below, the electric air pump may further include an air-supplementing pump, an air pressure sensor and a central controller. When the air pressure within the inflatable object is lower than the preset value as detected by the air pressure sensor, the air-supplementing pump is initiated. When the supplemented air pressure arrives at the preset value, the air-supplementing pump is disabled.

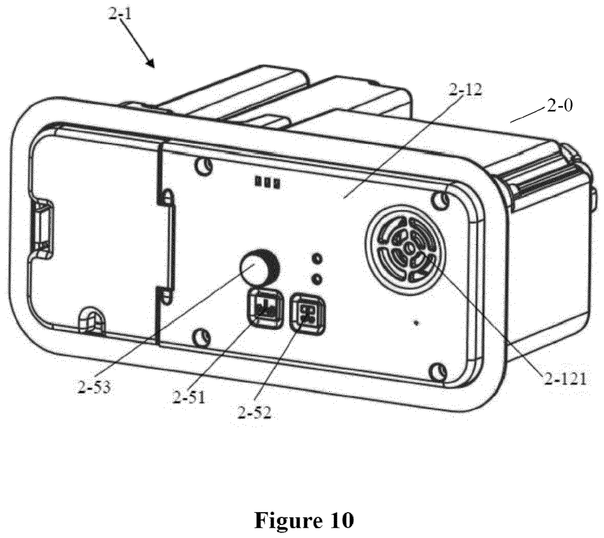

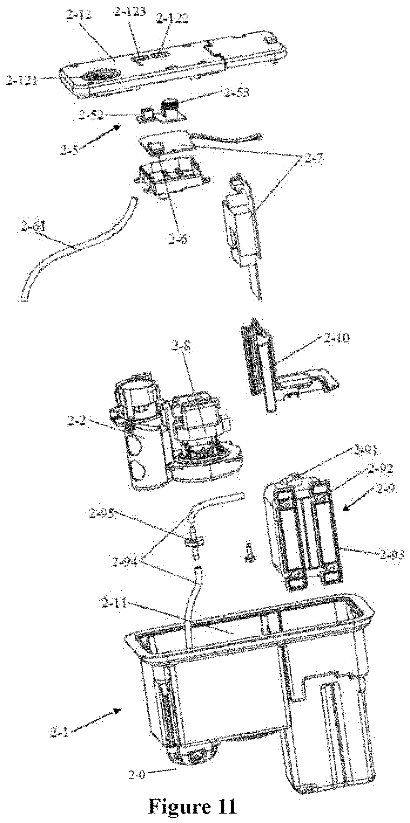

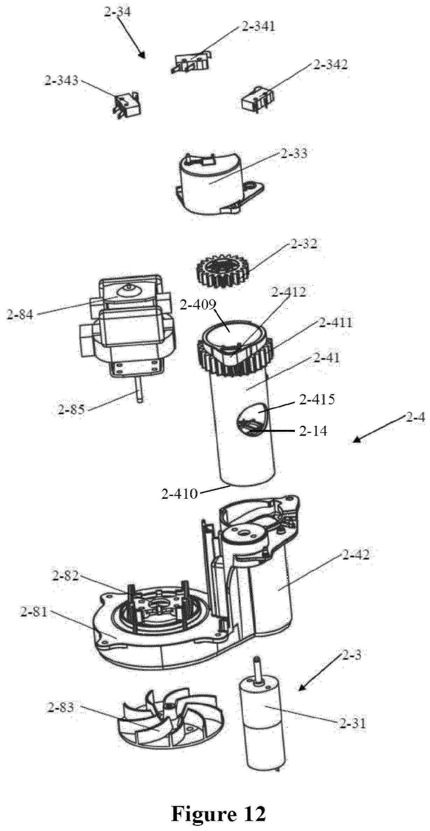

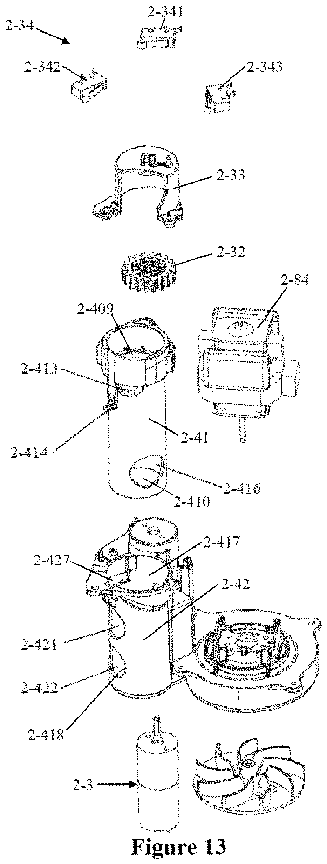

Figure 10 is a perspective view of the electric air pump according to various embodiments of the present disclosure. Figure 11 is an exploded view of the electric air pump as shown in Figure 10. Figure 12 is an exploded view of the airflow controller and the air pump of the electric air pump as shown in Figure 10. Figure 13 is a perspective view of the airflow controller and the air pump of the electric air pump as shown in Figure 10. In accordance with various embodiments of the present disclosure, as illustrated in Figures 10-13, the electric air pump may include a pump housing 2-1, an airflow controller 2-2, an input device 2-5, an air pressure sensor 2-6, a central controller 2-7, an air pump 2-8 and an air-supplementing pump 2-9. The air pump 2-8 is configured to pump air into the inflatable object or deflate air from the inflatable object. The airflow controller 2-2 is coupled to the air pump 2-8 and drives switching between two or more air passages (not shown). The air pressure sensor 2-6 is in communication with the inflatable object to detect the internal air pressure of the inflatable object. The central controller 2-7 is electrically coupled to the air pump 2-8, the airflow controller 2-2 and the air pressure sensor 2-6. The central controller 2-7 is configured to receive the stepless regulation command signal from the user (i.e., a desired air pressure value within a certain range input by the user) and control the air pump 2-8 and the airflow controller 2-2 to steplessly regulate the internal pressure of the inflatable object according to the detection result from the air pressure sensor 2-6 and the stepless regulation command signal.

In the depicted embodiments, the air pump 2-8, the air pressure sensor 2-6 and the central controller 2-7 are disposed within the pump housing 2-1. A panel 2-12 is disposed on the pump housing 2-1 to cover one side of the pump housing 2-1. The panel 2-12 is provided with a vent hole 2-121, a first button hole 2-122 and a second button hole 2-123.

As illustrated, the input device 2-5 is disposed on the panel 2-12 and is coupled to the central controller 2-7. The input device 2-5 is provided with an inflating button 2-51 and a deflating button 2-52 corresponding to air inflation and deflation. The inflating button 2-51 and the deflating button 2-52 extend through the first button hole 2-122 and the second button hole 2-123 for exposure to the outside. The input device 2-5 may further include a regulation knob 2-53 for inputting the stepless regulation command signal.

In some embodiments, a touch screen or regulation button can be used as the input device 2-5.

Referring to Figure 11, the airflow controller 2-2 is disposed within the cavity 2-11 of the pump housing 2-1. Referring to Figure 12, the airflow controller 2-2 may include a flow control actuator 2-3 and an air passage switching device 2-4. The flow control actuator 2-3 is coupled to the central controller 2-7, such that a flow control actuator 2-31 is initiated by an initiation signal sent by the central controller 2-7 to drive the air passage switching device 2-4 for switching the air passages.

Referring to figures 12-13, the air passage switching device 2-4 may include a hollow inner tube 2-41 and an outer tube 2-42. The top end and the bottom end of the inner tube 2-41 are the first opening 2-409 and the second opening 2-410 respectively. The first opening 2-409 is in communication with the ambient atmosphere through the vent hole 2-121 on the panel 2-12. The second opening 2-410 is in communication with an air valve 2-13. A sliding block 2-414 matching with the outer tube 2-42 of the air passage switching device 2-4 is disposed outside of the inner tube 2-41. A partition 2-14 is disposed within the inner tube 2-41 to separate the internal of the inner tube 2-41 into two parts not in communication with each other. A first vent 2-415 and a second vent 2-416 are disposed on the wall of the inner tube 2-41 above and below the partition 2-14. The first vent 2-415 has an opening direction opposite to that of the second vent 2-416. The outer tube 2-42 is sleeved on the outside of the inner tube 2-41. The top end and the bottom end of the outer tube are the third opening 2-417 and the fourth opening 2-418 respectively. The inner wall of the outer tube 2-42 is closely adjacent to the outer wall of the inner tube 2-41. The inner tube 2-41 can be moved or rotated within the outer tube 2-42. The bottom end of the outer tube 2-42 is fixedly coupled to the pump housing 2-1. The air valve 2-13 is disposed within the fourth opening 2-418 on the bottom end of the outer tube 2-42 and functions to control whether air is allowed to flow through the fourth opening 2-418 between the inflatable object and the interior of the airflow controller 2-2. An inlet hole 2-423 and a first outlet hole 2-421 and a second outlet hole 2-422 opposite to the inlet hole 2-423 are disposed on the wall of the outer tube 2-42. The first outlet hole 2-421 is vertically adjacent to the second outlet hole 2-422.

A wave sliding slot 2-427 is disposed on the wall of the outer tube 2-42 and may include a middle portion disposed at a raised position compared to two ends at either side of the middle portion. The wave sliding slot 2-427 may be disposed at a position corresponding to that of the sliding block 2-414 on the inner tube 2-41 and receive the movement thereof. Interaction between the sliding block 2-414 on the inner tube 2-41 and the wave sliding slot 2-427 causes the inner tube 2-41 to move axially up or down as the inner tube is rotated. With the inner tube 2-41 in a fully rotated position in a clockwise direction, the sliding block 2-414 on the inner tube 2-41 is at an end of the wave sliding slot 2-427, causing the inner tube 2-41 to be in a lowered position, such as the inflating position shown on FIG. 14. With the inner tube 2-41 in a fully rotated position in a counter-clockwise direction, the sliding block 2-414 on the inner tube 2-41 is at an end of the wave sliding slot 2-427, causing the inner tube 2-41 to be in a lowered position, such as the deflating position shown on FIG. 15. With the inner tube 2-41 in an intermediate position half way between the fully clockwise and counter-clockwise positions, the sliding block 2-414 on the inner tube 2-41 is at the middle portion of the wave sliding slot 2-427, causing the inner tube 2-41 to be in a raised position, resulting in the closed position shown on FIG. 16.

As also shown in figures 14-16, the air valve 2-13 is fixed to the inner tube 2-41 and is opened with the inner tube 2-41 in the lowered position for allowing air to be inflated or deflated from the inflatable object, as illustrated in figures 14 and 15, respectively. The air valve 2-13 is closed with the inner tube 2-41 in the raised position, preventing air from being transferred to or from the inflatable object as illustrated in figure 16.

In the depicted embodiments, the airflow controller 2-2 may further include at least one position sensor 2-34, which is disposed within the cavity 2-11 and is coupled to the central controller 2-7. The position sensor 2-34 is triggered by the air passage switching device 2-4 to generate the position signal to be sent to the central controller 2-7.

Referring to Figure 12, the position sensor 2-34 may include a first signal generating device 2-341, a second signal generating device 2-342 and a third signal generating device 2-343. The first signal generating device 2-341 is triggered by the air passage switching device 2-4 to generate the position signal and send to the central controller 2-7 when the air passage switching device 2-4 is switched to the inflating position. The second signal generating device 2-342 is triggered by the air passage switching device 2-4 to generate the position signal and send to the central controller 2-7 when the air passage switching device 2-4 is switched to the deflating position. The third signal generating device 2-343 is triggered by the air passage switching device 2-4 to generate the position signal and send to the central controller 2-7 when the air passage switching device 2-4 is switched to the closed position. In some embodiments, the first, the second and the third signal generating devices 2-341, 2-342, and 2-343 are microswitches. In other embodiments, optoelectronic switches or reed switches and any other similar or appropriate switches can be used as the signal generating devices.

In the depicted embodiments, the inner tube 2-41 may further include a first driving gear 2-411, a first protruded block 2-412, and a second protruded block 2-413. The first driving gear 2-411 is disposed exterior to the first opening of the inner tube 2-41. The first protruded block 2-412 is disposed exterior to the first opening of the inner tube 2-41, for triggering the third signal generating device 2-343 when rotating the inner tube 2-41. The second protruded block 2-413 is disposed exterior to the first opening of the inner tube 2-41, opposite to the first protruded block 2-412, for triggering the first signal generating device 2-341 or the second signal generating device 2-342 when rotating the inner tube 2-41.

In accordance with some embodiments, the flow control actuator 2-3 can further include a flow control actuator 2-31, a second driving gear 2-32 and a motor scaffold 2-33.

The second driving gear 2-32 is axially coupled to the flow control actuator 2-31 at a position corresponding to that of the first driving gear 2-411. The motor scaffold 2-33 is coupled to the outer tube 2-42. The flow control actuator 2-31 is fixed on the motor scaffold 2-33. The flow control actuator 2-31 drives the first driving gear 2-411 via the second driving gear 2-32 to rotate the inner tube 2-41 within the outer tube 2-42.

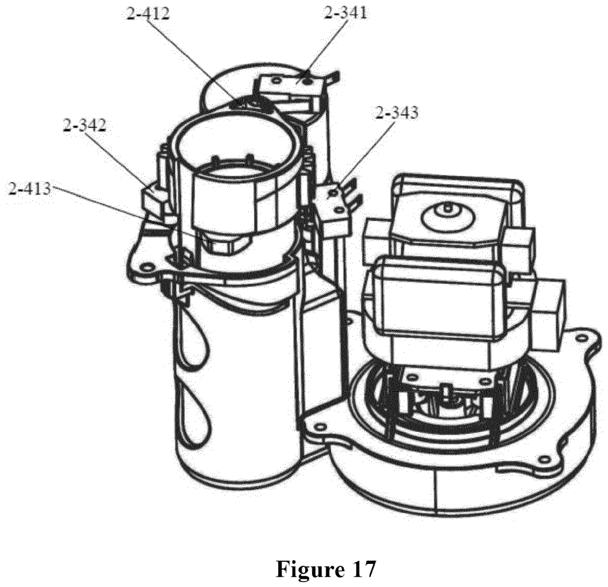

Figure 14 is a schematic diagram of the air switching device switched to the inflating position. Figure 15 is a schematic diagram of the air switching device switched to the deflating position. Figure 16 is a schematic diagram of the air switching device switched to the closed position. Figure 17 is a schematic diagram of the airflow controller and the air pump of the electric air pump as shown in Figure 10. As illustrated, in the embodiments of Figures 14-17, with further reference to Figures 10-13, the air pump 2-8 may include a fan cover 2-81 coupled to the pump housing 2-1, which separates the cavity 2-11 of the pump housing 2-1 into a fan cavity and a cavity in communication with the outer space. The fan cover 2-81 is provided with an inlet 2-82 which is in communication with the first outlet hole 2-421 and the second outlet hole 2-422 disposed on the outer tube 2-42 of the air passage switching device 2-4, and an outlet 2-86 which is coupled to the inlet hole 2-423 disposed on the outer tube 2-42 of the air passage switching device 2-4. An impeller 2-83 is disposed within the fan cover 2-81. The motor 2-84 is disposed within the cavity 2-11 and disposed on the fan cover 2-81. The rotational axis 2-85 of the motor 2-84 passes through the inlet 2-82 on the fan cover 2-81 which is to be coupled to the impeller 2-83. The motor 2-84 is coupled to the central controller 2-7.

Based on the above structure, referring to Figure 14, when the inner tube 2-41 is rotated to align the first vent 2-415 of the inner tube 2-41 with the first outlet hole 2-421 of the outer tube 2-42 and with the second vent 2-416 of the inner tube 2-41 aligned with the inlet hole 2-423 of the outer tube 2-42, the air passage switching device 2-4 is switched to the inflating position. Referring to Figure 15, when the inner tube 2-41 is rotated to align the first vent 2-415 of the inner tube 2-41 with the inlet hole 2-423 of the outer tube 2-42 and align the second vent 2-416 of the inner tube 2-41 with the second outlet hole 2-422 of the outer tube 2-42, the air passage switching device 2-4 is switched to the deflating position. Referring to Figure 16, when the inner tube 2-41 is rotated to misalign the first vent 2-415 of the inner tube 2-41 from the first outlet hole 2-421 and the inlet hole 2-423 of the outer tube 2-42, and to misalign the second vent 2-416 of the inner tube 2-41 from the inlet hole 2-423 and the second outlet hole 2-422 of the outer tube 2-42, the air passage switching device 2-4 is switched to the closed position.

In accordance with some embodiments, referring to Figure 11, the air pressure sensor 2-6 is disposed on the lower surface of the central controller 2-7 and is in communication with the inflatable object via a pressure detection tube 2-61, one end of which is coupled to the air pressure sensor 2-6 and the other end is coupled to a pressure detection hole (not shown) disposed on the pump housing 2-1. The pressure detection hole is in communication with the interior of the inflatable object 2-0.

In some embodiments, the air pressure sensor 2-6 may also be disposed within the cavity 2-11. The probe of the air pressure sensor 2-6 is disposed within the cavity 2-11 and in communication with the pressure detection hole on the pump housing 2-1, which is in communication with the interior of the inflatable object 2-0. Alternatively, the probe of the air pressure sensor 2-6 is disposed at the pressure detection hole or in communication with the interior of the inflatable object 2-0 via pressure detection tube coupled to the probe and the pressure detection hole at two ends thereof.

As illustrated in Figure 11, the air-supplementing pump 2-9 is coupled to the central controller 2-7 and may further include a second inlet (not shown) and a second outlet 2-91. The second inlet is used for allowing air into the air-supplementing pump 2-9 from the ambient atmosphere and the second outlet 2-91 is coupled to the interior of the inflatable object 2-0. At least one end of a damping part 2-92 is coupled to the air-supplementing pump 2-9. A mounting scaffold 2-93 is coupled to the pump housing 2-1. A second end of the damping part 2-92 is coupled to the mounting scaffold 2-93.

After the internal pressure value in the interior of the inflatable object 2-0 arrives at the preset inflating pressure value, the central controller 2-7 sends an initiation signal to the air-supplementing pump 2-9 when the internal pressure value in the interior of the inflatable object 2-0 as detected by the air pressure sensor 2-6 arrives at the preset air-supplementing pressure value. When the internal pressure value in the inflatable object as detected by the air pressure sensor 2-6 arrives at the preset inflating pressure value again, a stopping signal is sent to the air-supplementing pump 2-9. The preset air supplementing pressure value is lower than or equivalent to the preset inflating pressure value.

In some embodiments, the air-supplementing pump 2-9 is disposed within the cavity of the pump housing 2-1. The air-supplementing pump 2-9 is separated from the air pump 2-8 by a support 2-10. The second outlet 2-91 is communication with the interior of the inflatable object 2-0 via the air-supplementing tube 2-94. One end of the air-supplementing tube 2-94 is coupled to the second outlet 2-91 and the other end is coupled to an air-supplementing opening (not shown) disposed on the pump housing 2-1. The air-supplementing pump 2-9 is also provided with a one-way valve 2-95 to block flowing of air from the interior of the inflatable object 2-0 to the ambient atmosphere when the air-supplementing pump 2-9 is stopped. The one-way valve 2-95 is coupled to the air-supplementing tube 2-94.

For example, the pressure value (i.e., the internal pressure value within the inflatable object) that can be steplessly regulated can be set between 200 mmH2O and 320 mmH2O. Gear can be set as 120 gears and each gear is 1 mmH2O, or gear can be set as 240 gears and each gear is 0.5 mmH2O. However, the various embodiments described herein are not limited to the aforementioned configuration. In operation, the user may rotate the knob 2-53 to the position of 270 mmH2O and press the inflating button 2-51. The air pump 2-8 performs inflation at the highest air pressure such as 400 mmH2O. The air pressure sensor 2-6 monitors the internal pressure within the interior of the inflatable object 2-0 in real-time and sends the results back to the central controller 2-7. The central controller 2-7 determines the internal pressure within the interior of the inflatable object 2-0 according to the inflating pressure value 270 mmH2O input using the knob 2-53, and the results monitored by the air pressure sensor 2-6 in real-time. When the internal pressure arrives at 270 mmH2O, the central controller 2-7 stops inflation of the air pump 2-8 and drives the airflow controller 2-2 to switch from the inflating position to the closed position.

In addition, when the user rotates knob 2-53 to the position of 220 mmH2O while the pressure value is 270 mmH2O as detected by the air pressure sensor 2-6 in real-time, deflation operation is initiated according to the pressure value 220 mmH2O as input by the knob 2-53, and the results are monitored by the air pressure sensor 2-6 in real-time. Therefore, the central controller 2-7 controls the airflow controller 2-2 to switch to the deflating position, with the interior of the inflatable object 2-0 in fluid communication with the inlet 2-82 of the air pump 2-8, and the deflation operation of the air pump 2-8 is initiated (or the air pump 2-8 is not initiated in order to simply perform natural deflation). The air pressure sensor 2-6 continues to conduct real-time detection of internal pressure of the interior of the inflatable object 2-0. The central controller 2-7 determines whether it needs to disable deflation according to air pressure value of 220 mmH2O input by the knob 2-53 and the results monitored by the air pressure sensor 2-6 in real-time. When the internal pressure arrives at 220 mmH2O, the deflation operation of the air pump 2-8 is disabled and the airflow controller 2-2 is controlled by the central controller 2-7 to switch from the deflating position to the closed position.

When the user rotates the knob 2-53 from the position of 270mmH2O to the position of 320 mmH2O and the air pressure monitored by the air pressure sensor 2-6 in real-time is 270 mmH2O, the air-supplementing operation is initiated based on the pressure value of 320 mmH2O input by knob 2-53 and the results monitored by the air pressure sensor 2-6 in real-time. Therefore, the air-supplementing pump is controlled to conduct air-supplementation by the central controller 2-7. The air pressure sensor 2-6 continues to detect the internal pressure of the interior of the inflatable object 2-0. The central controller 2-7 determines whether it needs to disable the air-supplementation according to the pressure value of 320 mmH2O input by the knob 2-53 and the results monitored by the air pressure sensor 2-6 in real-time. When the internal pressure arrives at 320 mmH2O, the air-supplementing pump 2-9 is disabled by the central controller 2-7.

In accordance with various embodiments, the electric air pump may further include a wireless communication device to receive the stepless regulation command signal sent from the user via the mobile terminal. As such, and by way of example, the electric air pump can be remotely controlled by the user and, in turn, the level of inflation of the inflatable object can be remotely adjusted.

Although the present disclosure illustrates various embodiments, modifications can be made without departing from the spirit of the present disclosure. Any such modifications come within the scope of the present disclosure.

The above detailed descriptions merely set forth particular embodiments of the present disclosure. Those skilled in the art understand that various modifications can be made according to the teachings of the present disclosure and various equivalents can be utilized to practice the present disclosure. Therefore, the particular embodiments set forth herein are intended to set forth the present disclosure, not to limit the scope of the present disclosure. Therefore, various modifications, changes, and replacements come within the scope of the present disclosure. The electric air pump can be properly operated without certain specific elements or optional elements as disclosed herein. Unless otherwise clearly stated, the terms in the claims have the common meaning in the art.

Unless otherwise clearly stated, if the terms in the present disclosure is inconsistent with the terms in other reference documents, then the meanings of the terms as defined in the present disclosure should be used.

## Claims

1. An electric air pump assembly comprising:
an air pump (2-8) including an impeller (1-55) and a blower motor (107, 308) coupled to the impeller (1-55) and configured to drive the impeller (1-55) to rotate and generate air pressure;
a power interface (111) in electrical communication with the blower motor (107, 308) and configured to supply an alternating current to power the blower motor (107, 308); and
an adjustable speed motor drive (110) electrically coupled to the power interface (111) and the blower motor (107, 308) to steplessly regulate the air pressure generated by the impeller via the blower motor (107, 308).

2. The electric air pump assembly of Claim 1, wherein the adjustable speed motor drive (110) comprises:
an input device (101, 202, 302) into which a stepless regulation command signal is input; and
a regulation device communicatively coupled to the input device (101, 202, 302) and configured to receive the stepless regulation command signal, the regulation device further being configured to control and regulate a driving voltage of the blower motor (107, 308), wherein the stepless regulation command signal is an instruction to steplessly regulate the rotational speed of the impeller.

3. The electric air pump assembly of Claim 2, wherein the input device (101, 202, 302) comprises:
an adjustable trimpot configured to generate a potential signal representing the stepless regulation command signal, wherein the regulation device comprises a silicon-controlled rectifier driving circuit (104) configured to control the rotational speed of the blower motor (107, 308);
a zero-crossing detection circuit (103) coupled to the power interface and configured to detect a zero-crossing signal of the alternating current; and
a microcontroller (100) configured to:
(1) receive the potential signal generated by the adjustable trimpot and the zero-crossing signal of the alternating current detected by the zero-crossing detection circuit (103); and
(2) generate a rotational speed control signal based on the potential signal and the zero-crossing signal, and to send the rotational speed control signal to the silicon-controlled rectifier driving circuit (104).

4. The electric air pump assembly of Claim 3, wherein the regulation device further comprises a rectifying power supply (106) configured to transform the alternating current to direct current and to supply the direct current to at least one of: the microcontroller (100), the adjustable trimpot, the silicon-controlled rectifier driving circuit (104), or the zero-crossing detection circuit (103).

5. The electric air pump assembly of Claim 4, wherein the rectifying power supply (106) comprises a first rectifier and a transformer.

6. The electric air pump of Claim 1, wherein the blower motor (107, 308) is a direct current motor, and the air pump further comprises a rectifier (1-57) configured to transform alternating current to direct current.

7. The electric air pump assembly of Claim 1, wherein the adjustable speed motor drive further comprises a drive status indicator (102, 203) configured to transmit a prompt indicating whether the adjustable speed motor drive is either working or not working.

8. The electric air pump assembly of Claim 1, further comprising an air passage switching device (2-4) configured to switch an air passage to any one of an inflating position, a deflating position or a closed position;
wherein an interior of an inflatable object is in communication with an outlet of the air pump in the inflating position;
wherein the interior of the inflatable object is in communication with an inlet of the air pump in the deflating position; and
wherein the interior of the inflatable object is blocked from communication with the air pump in the closed position.

9. The electric air pump assembly of Claim 1, further comprising:
an air pressure sensor (201, 301) configured to detect internal air pressure of an inflatable object;
a central controller (200, 300, 2-7) configured to start the blower motor (107, 308) when an air pressure value detected by the air pressure sensor (201, 301) is lower than a preset value and to deactivate the blower motor (107, 308) when the air pressure value detected by the air pressure sensor (201, 301) is equal to or higher than the preset value.

10. The electric air pump assembly of Claim 1, further comprising:
an air-supplementing pump (2-9);
an air pressure sensor (201, 301) configured to detect the internal air pressure of an inflatable object; and
a central controller (200, 2-7) configured to start the air-supplementing pump (2-9) when an air pressure value detected by the air pressure sensor is lower than a preset value and to deactivate the air-supplementing pump (2-9) when the air pressure value detected by the air pressure sensor (201, 301) is equal to or higher than the preset value.

11. The electric air pump assembly of Claim 1, wherein the adjustable speed motor drive (110) further comprises:
an air pressure sensor (201, 301) configured to detect internal air pressure of an inflatable object;
an input device (101, 202, 302) configured to generate a stepless regulation command signal in response to a user operation; and
a central controller (200, 300, 2-7) communicatively coupled to the air pressure sensor (201, 301) and the input device (101, 202, 302), the central controller (200, 300, 2-7) being configured to generate a regulation command for regulating the rotational speed of the impeller according to an air pressure value detected by the air pressure sensor (201, 301) and the stepless regulation command signal; and
a voltage regulator (204) communicatively coupled to the central controller (200, 300, 2-7), the voltage regulator (204) being electrically coupled to the blower motor (107, 308) and configured to regulate and apply a driving voltage to the blower motor (107, 308) according to the regulation command.

12. The electric air pump assembly of Claim 11, wherein the input device (101, 202, 302) comprises at least one of an adjusting knob, an adjusting key, or a touch-enabled display device (305).

13. The electric air pump assembly of Claim 11, further comprising a display device (305) communicatively coupled to the central controller (200, 2-7), the display device (305) configured to receive and show display information generated by the central controller (200, 2-7), wherein the display information includes at least one of an inflating status for the air pump, a deflating status for the air pump, a preset inflating air pressure value for the air pump, a preset deflating air pressure value for the air pump, a current air pressure value detected by the air pressure sensor, a normal operating status for the air pump, or an abnormal operating status for the air pump.

14. The electric air pump assembly of Claim 1, further comprising:
an airflow controller (2-2) coupled to the air pump (2-8), and configured to switch between at least two positions.

15. The electric air pump assembly of Claim 14, wherein the airflow controller (2-2) comprises a flow control actuator (2-3) and an air passage switching device (2-4), the flow control actuator (2-3) being configured to switch from a first one of the at least two positions to a second one thereof according to a control command transmitted by the central controller, the at least two positions including one or more of an inflating position, a deflating position, or a closed position.
